# EUROPEAN PATENT APPLICATION

(11) **EP 3 327 312 A1**
(43) Date of publication of application: **30.05.2018**
(21) Application number: 16839311.4
(22) Date of filing: 24.08.2016
(51) Int. Cl.: F16H 55/34

(54) **FRICTION PULLEY**

(30) Priority: 25.08.2015 JP 2015165712
(71) Applicant: NOK Corporation, Tokyo 105-8585 (JP)
(72) Inventor: ITO, Sosuke, Fujisawa-shi Kanagawa 251-0042 (JP); INOUE, Masahiko, Fujisawa-shi Kanagawa 251-0042 (JP)
(74) Representative: Prüfer & Partner mbB Patentanwälte · Rechtsanwälte
(86) International application number: PCT/JP2016/074646
(87) International publication number: WO 2017/033964

(57) **Abstract**

To provide a friction pulley which can transmit a high torque.

A friction pulley (50) includes a rotatable rotary wheel (40) having a groove (4) on an outer periphery thereof, and a rubber ring (3) formed so as to be able to be accommodated in the groove (4). The friction pulley (50) is characterized by the following: the groove (4) has a pair of side surfaces (16, 26); the rubber ring (3) has a contact surface (33) which is brought into pressure contact with a rotary member so as to transmit power on an outer periphery thereof, and friction surfaces (31, 32) which are a pair of surfaces corresponding to the groove (4); at least in a power transmission state where the contact portion (33) is brought into pressure contact with the rotary member so as to transmit power, the friction surfaces (31, 32) of the rubber ring (3) are pushed to the side surfaces (16, 26) of the groove (4); and the friction pulley (50) includes separation preventing devices (51, 53) for preventing separation of the rubber ring (3) from the groove (4) in an outward direction.

## Description

### Technical Field

The present invention relates to a friction pulley, and particularly relates to a friction pulley used for transmitting power in a vehicle or in an industrial machine.

### Background Art

In an internal combustion engine of a vehicle, for example, a pulley or a belt is used in a power transmission mechanism for transmitting power of a crankshaft to accessories such as a water pump. A conventional power transmission mechanism is configured such that a crankshaft and all accessories are connected with each other by a belt and a pulley so that power is transmitted to all accessories from the crankshaft. Accordingly, in an internal combustion engine having such a power transmission mechanism, the loss of generated energy is considerable. On the other hand, recently, a power transmission mechanism has been proposed which has a configuration where connection and disconnection between a crankshaft and accessories can be selected (for example, see Patent Literatures 1, 2).

Patent Literature 1 discloses a power transmission mechanism including: a pulley which is attached to a crankshaft and around which a belt is wound; a friction pulley having a support disk attached to a water pump and a friction wheel mounted on an outer periphery of the support disk and made of an elastomeric material; and an idler pulley which enables connection and separation between these pulley and friction pulley. In the conventional power transmission mechanism, the idler pulley is brought into contact with respective pulleys of the crankshaft and the water pump so that the crankshaft and the water pump are connected with each other. Alternatively, the idler pulley is separated from the respective pulleys so that the connection between the crankshaft and the water pump is disconnected. In this manner, a power transmission path can be selected.

### Citation List

### Patent Literatures

Patent Literature 1: International Publication No. WO 2006/051094
Patent Literature 2: International Publication No. WO 2014/038554

### Summary of Invention

### Technical Problem

However, in the above-mentioned friction pulley in the conventional power transmission mechanism where the power transmission path can be selected, joint strength between the friction wheel and the support disk is not high. Accordingly, when a high torque is transmitted, there may be a case where a joint between the friction wheel and the support disk is fails so that the friction wheel and the support disk are separated from each other, thus causing the friction wheel to deflect. Accordingly, in a starter motor or the like which requires transmission of a high torque of 80 to 100 Nm, the above-mentioned friction pulley cannot be used.

For this reason, conventionally, there is a demand for a structure of a friction pulley which can transmit a high torque.

The present invention has been made in view of the above-mentioned drawbacks, and it is an object of the present invention to provide a friction pulley which can transmit a high torque.

### Solution to Problem

To achieve the above-mentioned object, the friction pulley according to the present invention is a friction pulley for transmitting power in a state of being brought into pressure contact with an outer periphery of a rotary member which rotates, the friction pulley being characterized by including: a rotary wheel having a groove on an outer periphery of the rotary wheel, the groove being recessed toward an inner periphery side, the rotary wheel being rotatable about an axis; and a rubber ring having an annular shape and being made of rubber, the rubber ring being formed so as to be capable of being accommodated in the groove of the rotary wheel. The groove has a pair of side surfaces facing each other in a direction of the axis, each of the pair of side surfaces having an annular shape and extending from the inner periphery side toward an outer periphery side. The rubber ring is accommodated in the groove, and has a contact surface at an outer periphery of the rubber ring and friction surfaces that are a pair of surfaces corresponding to the pair of side surfaces of the groove, the contact surface is configured to be brought into pressure contact with the rotary member so as to transmit power, and, at least in a power transmission state where the contact surface is into pressure contact with the rotary member so as to transmit power, the friction surfaces of the rubber ring are pushed against the side surfaces of the groove, and the friction pulley further includes a separation preventing device preventing separation of the rubber ring from the groove in an outward direction.

The friction pulley according to one aspect of the present invention is characterized in that the separation preventing device includes an anchor portion formed on the rubber ring, and an anchor accommodating portion which is formed on the rotary wheel so as to extend from the groove, and accommodates the anchor portion in a lockable manner on the outer periphery side.

The friction pulley according to one aspect of the present invention is characterized in that the separation preventing device includes a rib portion which connects a portion of the rubber ring accommodated in the groove and the anchor portion with each other, and a rib accommodating portion which is formed on the rotary wheel between the anchor accommodating portion and the groove so as to accommodate the rib portion.

The friction pulley according to one aspect of the present invention is characterized in that the anchor accommodating portion accommodates the anchor portion with a gap formed on a side opposite to a side where the groove is formed, and the rib accommodating portion accommodates the rib portion with a gap.

The friction pulley according to one aspect of the present invention is characterized in that the separation preventing device includes a pin member which penetrates the rubber ring so as to be attached to the rotary wheel.

### Effects of Invention

According to the friction pulley of the present invention, a high torque can be transmitted.

### Brief Description of Drawings

[Fig. 1] Fig. 1 is a cross-sectional view, taken along an axis, of a friction pulley according to an embodiment of the present invention showing a schematic configuration of the friction pulley.
[Fig. 2] Fig. 2 is an exploded cross-sectional view, taken along the axis, of the friction pulley according to the embodiment of the present invention showing the friction pulley in a state where respective configurations of the friction pulley are separated from each other.
[Fig. 3] Fig. 3 is a cross-sectional view, taken along an axis, of an upper portion of a friction pulley according to a first modified embodiment of the present invention showing a schematic configuration of the friction pulley.
[Fig. 4] Fig. 4 is a cross-sectional view, taken along an axis, of an upper portion of a friction pulley according to a second modified embodiment of the present invention showing a schematic configuration of the friction pulley.
[Fig. 5] Fig. 5 is a cross-sectional view, taken along an axis, of an upper portion of a friction pulley according to a third modified embodiment of the present invention showing a schematic configuration of the friction pulley.
[Fig. 6] Fig. 6 is a cross-sectional view, taken along an axis, of an upper portion of a friction pulley according to a fourth modified embodiment of the present invention showing a schematic configuration of the friction pulley.
[Fig. 7] Fig. 7 is a cross-sectional view, taken along the axis, of an upper portion of the friction pulley according to the embodiment of the present invention shown in Fig. 1 and Fig. 2 showing a schematic configuration of the friction pulley.
[Fig. 8] Fig. 8 is an exploded partial cross-sectional view, taken along an axis, of an upper portion of a friction pulley according to a fifth modified embodiment of the present invention showing a schematic configuration of the friction pulley.
[Fig. 9] Fig. 9 is a cross-sectional view, taken along an axis, of an upper portion of a friction pulley according to a sixth modified embodiment of the present invention showing a schematic configuration of the friction pulley.
[Fig. 10] Fig. 10 is a cross-sectional view, taken along an axis, of an upper portion of a friction pulley according to a seventh modified embodiment of the present invention showing a schematic configuration of the friction pulley.

### Description of Embodiments

Hereinafter, an embodiment of the present invention will be described with reference to drawings.

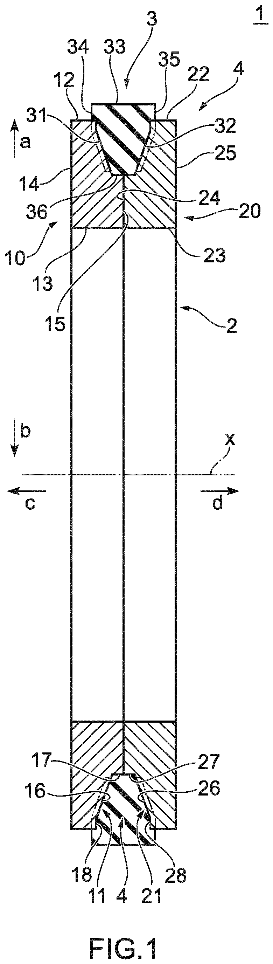

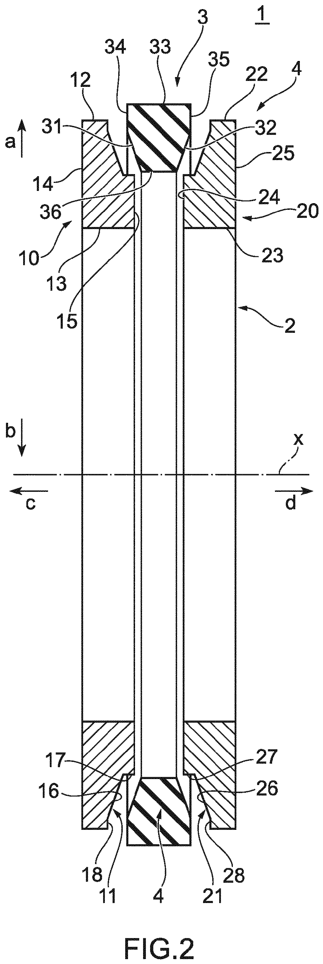

Fig. 1 is a cross-sectional view, taken along an axis, of a friction pulley 1 according to an embodiment of the present invention showing a schematic configuration of the friction pulley 1. Fig. 2 is an exploded cross-sectional view, taken along the axis, of the friction pulley 1 according to the embodiment of the present invention showing the friction pulley 1 in a state where respective configurations of the friction pulley 1 are separated from each other. Hereinafter, for the sake of convenience of the description, a direction of separation from the axis x (see an arrow "a" in Figs. 1, 2) is assumed as an outer periphery side or an outer peripheral direction, and a direction of approach to the axis x (see an arrow "b" in Figs. 1, 2) is assumed as an inner periphery side or an inner peripheral direction. Further, in Figs. 1, 2, a left side in the direction of the axis x (see an arrow "c" in Figs. 1, 2) is assumed as a front side or a front, and a right side in the direction of the axis x (see an arrow "d" in Figs. 1, 2) is assumed as a rear side or a rear.

As shown in Figs. 1, 2, the friction pulley 1 includes a base body 2 as a rotary wheel, and a rubber ring 3 attached to the outer periphery side of the base body 2. The base body 2 has an outer peripheral surface in an annular shape and, for example, as described later, has a hollow disk shape or a hollow cylindrical shape centered about the axis x. The rubber ring 3 is a member in an annular shape made of rubber, and has an outer peripheral surface in an annular shape. As a material for forming the base body 2, any of various materials can be used. For example, the base body 2 is made of a resin or metal. As a rubber material of the rubber ring 3, any of various rubber materials can be used. For example, nitrile rubber (NBR), hydrogenated nitrile rubber (H-NBR), ethylene-propylene rubber (EPDM), styrene-butadiene rubber (SBR), natural rubber (NR), urethane or the like can be named. A rubber material having a physical property which meets the requirement is selected.

The base body 2 includes: a front disk 10 as a first base body portion which expands in the outer peripheral direction with respect to the axis x; and a rear disk 20 as a second base body portion which expands in the outer peripheral direction with respect to the axis x. The front disk 10 has an outer peripheral surface in an annular shape and, on a side surface of the front disk 10 on one side (rear side) in the direction of the axis x, the front disk 10 has a front stepped portion 11 which is a stepped portion in an annular shape extending along the outer peripheral surface. Further, in the same manner, the rear disk 20 has an outer peripheral surface in an annular shape and, on a side surface of the rear disk 20 on one side (front side) in the direction of the axis x, the rear disk 20 has a rear stepped portion 21 which is a stepped portion in an annular shape extending along the outer peripheral surface.

In the base body 2, the front disk 10 and the rear disk 20 face each other on one side surface on one side of each of the front disk 10 and the rear disk 20. That is, the side surface of the front disk 10 on the rear side and the side surface of the rear disk 20 on the front side face each other. At a portion of the base body 2 on the outer periphery side, the front stepped portion 11 of the front disk 10 and the rear stepped portion 21 of the rear disk 20 face each other thus forming a groove 4 in an annular shape. A width of the groove 4 in the direction of the axis x is smaller than a width of the rubber ring 3 in the direction of the axis x so that the rubber ring 3 is compressed and clamped by the groove 4 of the base body 2 such that an outer peripheral surface of the rubber ring 3 is positioned more on the outer periphery side than the outer peripheral surface of the front disk 10 and the outer peripheral surface of the rear disk 20.

In the base body 2, the front disk 10 and the rear disk 20 are fixed with each other in a non-movable manner in the direction of the axis x, that is, are fixed with each other such that the front disk 10 and the rear disk 20 cannot perform relative movement in the direction of the axis x. Further, the front disk 10 and the rear disk 20 are fixed with each other such that the front disk 10 and the rear disk 20 cannot perform relative rotation about the axis x.

To be more specific, as shown in Figs. 1, 2, the front disk 10 has a shape of a hollow disk, and is defined by: the front stepped portion 11; an outer peripheral surface 12; an inner peripheral surface 13; a front-side side surface 14; and a rear-side side surface 15. The outer peripheral surface 12 is a cylindrical surface centered about the axis x. The inner peripheral surface 13 is also a cylindrical surface centered about the axis x, and extends more on the inner periphery side than the outer peripheral surface 12, and extends in the direction of the axis x with a length longer than a length of the outer peripheral surface 12. The front-side side surface 14 is a disk surface extending in the direction intersecting with the direction of the axis x, for example, in the direction orthogonal to the axis x (hereinafter also referred to as "radial direction"), and the front-side side surface 14 expands between the outer peripheral surface 12 and the inner peripheral surface 13. The rear-side side surface 15 is a disk surface extending in the direction intersecting with the direction of the axis x, for example, in the radial direction, and the rear-side side surface 15 expands between the inner peripheral surface 13 and the front stepped portion 11.

The front stepped portion 11 is recessed toward a front side at a portion disposed on the outer periphery side of the rear-side side surface 15, and expands between an outer-peripheral-side end of the rear-side side surface 15 and a rear-side end of the outer peripheral surface 12. To be more specific, as shown in Figs. 1, 2, the front stepped portion 11 of the front disk 10 has a frontwardly-inclined surface (side surface) 16 as an inclined surface which is a surface in an annular shape which is inclined. The frontwardly-inclined surface 16 is formed into a conical surface shape where a diameter gradually increases from the rear side toward the front side in the direction of the axis x. The front stepped portion 11 includes: a stepped surface 17 which is a surface in an annular shape extending between the rear-side side surface 15 and the frontwardly-inclined surface 16; and a flange surface 18 which is a surface in an annular shape extending between the frontwardly-inclined surface 16 and the outer peripheral surface 12. To be more specific, the stepped surface 17 is a cylindrical surface centered about the axis x. Further, to be more specific, the flange surface 18 is a hollow disk surface centered about the axis x.

To be more specific, as shown in Figs. 1, 2, the rear disk 20 has a shape of a hollow disk, and is defined by: the rear stepped portion 21; an outer peripheral surface 22; an inner peripheral surface 23; a front-side side surface 24; and a rear-side side surface 25. The outer peripheral surface 22 is a cylindrical surface centered about the axis x. The inner peripheral surface 23 is also a cylindrical surface centered about the axis x, and extends more on the inner periphery side than the outer peripheral surface 22, and extends in the direction of the axis x with a length longer than a length of the outer peripheral surface 22. The front-side side surface 24 is a disk surface extending in the direction intersecting with the direction of the axis x, for example, in the radial direction, and expands between the inner peripheral surface 23 and the rear stepped portion 21. The rear-side side surface 25 is a disk surface extending in the direction intersecting with the direction of the axis x, for example, in the radial direction, and expands between the outer peripheral surface 22 and the inner peripheral surface 23.

The rear stepped portion 21 is recessed toward a rear side at a portion disposed on the outer periphery side of the front-side side surface 24, and expands between an outer-peripheral-side end of the front-side side surface 24 and a front side end of the outer peripheral surface 22. To be more specific, as shown in Figs. 1, 2, the rear stepped portion 21 of the rear disk 20 has a rearwardly-inclined surface (side surface) 26 as an inclined surface which is a surface in an annular shape which is inclined. The rearwardly-inclined surface 26 is formed into a conical surface shape where a diameter gradually increases from the front side toward the rear side in the direction of the axis x. The rear stepped portion 21 includes: a stepped surface 27 which is a surface in an annular shape extending between the front-side side surface 24 and the rearwardly-inclined surface 26; and a flange surface 28 which is a surface in an annular shape extending between the rearwardly-inclined surface 26 and the outer peripheral surface 22. To be more specific, the stepped surface 27 is a cylindrical surface centered about the axis x. Further, to be more specific, the flange surface 28 is a hollow disk surface centered about the axis x.

In the base body 2, as shown in Fig. 1, the frontwardly-inclined surface 16 of the front disk 10 faces the rearwardly-inclined surface 26 of the rear disk 20 thus forming the groove 4 in a substantially V shape. To be more specific, the frontwardly-inclined surface 16 and the flange surface 18 of the front disk 10 and the rearwardly-inclined surface 26 and the flange surface 28 of the rear disk 20 face each other in the direction of the axis x thus forming side surfaces of the groove 4 in a substantially V shape. Further, the stepped surface 17 of the front disk 10 and the stepped surface 27 of the rear disk 20 are connected with each other in a flush manner along the axis x thus forming a bottom surface of the groove 4 in a substantially V shape on the inner periphery side. The front stepped portion 11 of the front disk 10 may not have the flange surface 18, and the rear stepped portion 21 of the rear disk 20 may not have the flange surface 28.

In the base body 2, a portion of the groove 4 on the side of the front disk 10 and a portion of the groove 4 on the side of the rear disk 20 are disposed in plane symmetry with respect to a cross section orthogonal to the axis x. Further, the front disk 10 and the rear disk 20 are fixed such that a relative position in the direction of the axis x is non-movable so that the shape of the groove 4 is not deformable. Further, the front disk 10 and the rear disk 20 are fixed with each other such that the front disk 10 and the rear disk 20 cannot perform relative rotation about the axis x. The relative position between the front disk 10 and the rear disk 20 in the direction of the axis x is determined such that widths of the groove 4 in the direction of the axis x at respective points in the radial direction assume predetermined values respectively. The base body 2 includes a fixing means not shown in the drawing for making the relative position between the front disk 10 and the rear disk 20 non-movable in the direction of the axis x. As the fixing means, any of various means may be used including fixing using a bolt. Further, as a means for fixing the front disk 10 and the rear disk 20 such that the front disk 10 and the rear disk 20 cannot perform relative rotation about the axis x, any of various means may be used including fixing using a bolt or locking using a pin or the like.

A width of the groove 4 in the direction of the axis x is set to a value where, in the friction pulley 1, the rubber ring 3 is compressed by a predetermined width (compression margin) in the direction of the axis x so that a contact surface pressure of a predetermined pressure is generated between contact surfaces between the groove 4 and the rubber ring 3 whereby a desired frictional force is generated between the base body 2 and the rubber ring 3.

In the present embodiment, as shown in Fig. 1, the front disk 10 and the rear disk 20 are held and fixed in a state where the rear-side side surface 15 of the front disk 10 is in contact with the front-side side surface 24 of the rear disk 20. The front disk 10 and the rear disk 20 may be held and fixed in a state where the rear-side side surface 15 of the front disk 10 and the front-side side surface 24 of the rear disk 20 are spaced apart from each other in the direction of the axis x with a constant distance therebetween. In this case, a distance between the rear-side side surface 15 of the front disk 10 and the front-side side surface 24 of the rear disk 20 in the direction of the axis x is set to a distance where, in the friction pulley 1, a width of the groove 4 in the direction of the axis x assumes a predetermined width so as to allow the rubber ring 3 to be compressed by the above-mentioned compression margin.

Surface properties such as surface roughness and surface hardness and a dimension of the frontwardly-inclined surface 16 and the flange surface 18 of the front stepped portion 11 of the front disk 10, surface properties such as surface roughness and surface hardness and a dimension of the rearwardly-inclined surface 26 and the flange surface 28 of the rear stepped portion 21 of the rear disk 20, and an inclination angle and a shape of the frontwardly-inclined surface 16 and the rearwardly-inclined surface 26 are set such that a desired frictional force is generated between the base body 2 and the rubber ring 3. The stepped surface 17 of the front disk 10 and the stepped surface 27 of the rear disk 20 may also be set to have surface properties and a shape substantially equal to the surface properties and the shape of the frontwardly-inclined surface 16, the rearwardly-inclined surface 26, and the flange surfaces 18, 28. In the front stepped portion 11 of the front disk 10, the frontwardly-inclined surface 16, the stepped surface 17, and the flange surface 18 may respectively have the same surface properties, or any one surface out of the frontwardly-inclined surface 16, the stepped surface 17, and the flange surface 18 may have different surface properties. Alternatively, the frontwardly-inclined surface 16, the stepped surface 17, and the flange surface 18 may have different surface properties, respectively. In the same manner, in the rear stepped portion 21 of the rear disk 20, the rearwardly-inclined surface 26, the stepped surface 27, and the flange surface 28 may respectively have the same surface properties, or any one surface out of the rearwardly-inclined surface 26, the stepped surface 27, and the flange surface 28 may have different surface properties. Alternatively, the rearwardly-inclined surface 26, the stepped surface 27, and the flange surface 28 may have different surface properties, respectively. For example, the frontwardly-inclined surface 16, the rearwardly-inclined surface 26, and the flange surfaces 18, 28 which form the side surfaces of the groove 4 may have a large coarse surface roughness, and the stepped surfaces 17, 27 which form the bottom surface of the groove 4 may have a smooth surface roughness such as a surface roughness of a mirror surface.

In the base body 2, as shown in Fig. 1, the inner peripheral surface 13 of the front disk 10 and the inner peripheral surface 23 of the rear disk 20 are connected with each other in a flush manner along the axis x thus forming a cylindrical surface centered about the axis x. In the base body 2, in a through hole formed by the cylindrical surface formed of the inner peripheral surface 13 of the front disk 10 and the inner peripheral surface 23 of the rear disk 20, an attaching member, a bearing or the like of a device, a configuration or the like, in which the friction pulley 1 is used, such as a shaft of an accessory or a member attached to the shaft, is press-fitted or fixed. The fixing is performed by a known means not shown in the drawing such as a bolt, a nut or the like. The inner peripheral surface 13 of the front disk 10 and the inner peripheral surface 23 of the rear disk 20 have a shape which conforms to an object on which the friction pulley 1 is attached. The inner peripheral surface 13 of the front disk 10 and the inner peripheral surface 23 of the rear disk 20 may have different shapes. Further, the inner peripheral surface 13 of the front disk 10 and the inner peripheral surface 23 of the rear disk 20 may form a shaft hole, in which a shaft, which includes a device or a configuration to which the friction pulley 1 is attached, is attached thereto or is inserted therethrough. Further, the front disk 10 may be formed of a solid member having no inner peripheral surface 13. Further, the rear disk 20 may also be formed of a solid member having no inner peripheral surface 23.

The front disk 10 and the rear disk 20 may be formed into the same or similar shape, or may be formed into different shapes.

As shown in Figs. 1, 2, the rubber ring 3 has a shape which corresponds to the groove 4 of the base body 2 on the inner periphery side. The rubber ring 3 has a front side inclined surface (friction surface) 31 as a first side surface in a conical surface shape on a side surface thereof on the front side, and has a rear side inclined surface (friction surface) 32 as a second side surface in a conical surface shape on a side surface thereof on the rear side. Further, the rubber ring 3 has: an outer peripheral surface (contact surface) 33 in an annular shape; a front-side side surface 34 and a rear-side side surface 35, which extend from a front end and a rear end of the outer peripheral surface 33 toward the inner periphery side respectively; and an inner peripheral surface 36 in an annular shape which extends more on the inner periphery side than the outer peripheral surface. To be more specific, the outer peripheral surface 33 is a cylindrical surface centered about the axis x. The front-side side surface 34 extends between the front end of the outer peripheral surface 33 and an outer-peripheral-side end of the front side inclined surface 31. To be more specific, the front-side side surface 34 is a disk surface extending in the radial direction. The rear-side side surface 35 extends between the rear end of the outer peripheral surface 33 and an outer-peripheral-side end of the rear side inclined surface 32. To be more specific, the rear-side side surface 35 is a disk surface extending in the radial direction. To be more specific, the inner peripheral surface 36 is a cylindrical surface centered about the axis x, and extends between an inner-peripheral-side end of the front side inclined surface 31 and an inner-peripheral-side end of the rear side inclined surface 32. As described above, the rubber ring 3 is defined by the front side inclined surface 31, the rear side inclined surface 32, the outer peripheral surface 33, the front-side side surface 34, the rear-side side surface 35, and the inner peripheral surface 36.

As described above, the rubber ring 3 has a shape which corresponds to the groove 4 of the base body 2 on the inner periphery side. The front side inclined surface 31 and the front-side side surface 34 respectively correspond to the frontwardly-inclined surface 16 and the flange surface 18 of the front disk 10 which form the side surface of the groove 4 on the front side. The rear side inclined surface 32 and the rear-side side surface 35 respectively correspond to the rearwardly-inclined surface 26 and the flange surface 28 of the rear disk 20 which form the side surface of the groove 4 on the rear side. The inner peripheral surface 36 corresponds to the stepped surfaces 17, 27 forming the bottom surface of the groove 4. To be more specific, as shown in Fig. 2, on the basis of the axis x, the front side inclined surface 31 of the rubber ring 3 extends parallel to the frontwardly-inclined surface 16 of the front disk 10. Further, the rear side inclined surface 32 of the rubber ring 3 extends parallel to the rearwardly-inclined surface 26 of the rear disk 20.

The rubber ring 3 is set such that, at a portion of the front side inclined surface 31 and the rear side inclined surface 32, widths in the direction of the axis x at respective points in the radial direction respectively have a constant compression margin with respect to the groove 4.

A width of the groove 4 in the direction of the axis x is set to a value where, in the friction pulley 1, the rubber ring 3 is uniformly compressed along the front side inclined surface 31 and the rear side inclined surface 32 by a predetermined width (compression margin) in the direction of the axis x so that a contact surface pressure of a predetermined pressure is generated between contact surfaces between the groove 4 and the rubber ring 3 whereby a desired frictional force is generated between the base body 2 and the rubber ring 3.

As shown in Fig. 1, in the friction pulley 1, a portion of the rubber ring 3 on the inner periphery side is clamped and compressed by the groove 4 of the base body 2. The front side inclined surface 31 is pressed to the frontwardly-inclined surface 16 of the front disk 10 thus being in contact with the frontwardly-inclined surface 16. The rear side inclined surface 32 is pressed to the rearwardly-inclined surface 26 of the rear disk 20 thus being in contact with the rearwardly-inclined surface 26. The inner peripheral surface 36 is pressed to the stepped surfaces 17, 27 of the front disk 10 and the rear disk 20 thus being in contact with the stepped surfaces 17, 27.

In assembling the friction pulley 1, as shown in Fig. 2, the front disk 10 and the rear disk 20 are made to approach each other in the direction of the axis x so that the frontwardly-inclined surface 16 of the front disk 10 is brought into contact with the front side inclined surface 31 of the rubber ring 3, and the rearwardly-inclined surface 26 of the rear disk 20 is brought into contact with the rear side inclined surface 32 of the rubber ring 3 whereby the rubber ring 3 is compressed in the direction of the axis x. Then, when the rear-side side surface 15 of the front disk 10 and the front-side side surface 24 of the rear disk 20 are brought into contact with each other, the rubber ring 3 is compressed by a compression margin of a desired width so that a desired frictional force is generated between the rubber ring 3 and the base body 2. A frictional force is mainly generated between the frontwardly-inclined surface 16 of the front disk 10 and the front side inclined surface 31 of the rubber ring 3, between the rearwardly-inclined surface 26 of the rear disk 20 and the rear side inclined surface 32 of the rubber ring 3, and between the bottom surface of the groove 4 (the stepped surfaces 17, 27 of the front disk 10 and the rear disk 20) and the inner peripheral surface 36 of the rubber ring 3.

As shown in Fig. 1, in the friction pulley 1, the portion of the rubber ring 3 on the outer periphery side projects toward the outer periphery side from the outer peripheral surface of the base body 2, and the outer peripheral surface 33 of the rubber ring 3 is positioned more on the outer periphery side than the outer peripheral surface of the base body 2 (the outer peripheral surfaces 12, 22 of the front disk 10 and the rear disk 20). With such a configuration, the outer peripheral surface 33 of the rubber ring 3 of the friction pulley 1 can abut on a peripheral surface of a rotary member such as a belt or a pulley which is rotationally driven. Accordingly, the outer peripheral surface 33 of the rubber ring 3 of the friction pulley 1 is brought into pressure contact with a peripheral surface of the rotary member so that, by a frictional force generated between the outer peripheral surface 33 and the peripheral surface of the rotary member, power can be transmitted between the friction pulley 1 and the rotary member.

As described above, in the friction pulley 1 according to the embodiment of the present invention, the rubber ring 3 is clamped in the groove 4 of the base body 2 in a state of being compressed between the front disk 10 and the rear disk 20. Accordingly, a frictional force can be generated on a contact surface between the rubber ring 3 and the groove 4. By increasing a compression margin of the rubber ring 3, a frictional force generated on the contact surface between the rubber ring 3 and the groove 4 can be increased. Accordingly, it is possible to increase a load in the direction along the outer peripheral surface 33 of the rubber ring 3. The load is a load which the rubber ring 3 can receive without causing slippage with respect to the base body 2. Hence, a torque which the friction pulley 1 can transmit can be increased compared to the prior art. Further, a frictional force generated on the contact surface between the rubber ring 3 and the groove 4 can be set as large compared to an adhesive force acquired by an adhesive agent.

Further, when the friction pulley 1 is transmitting power, the rubber ring 3 is pressed in the inner peripheral direction at a contact point of the outer peripheral surface 33 with the rotary member. When pressed in such a fashion, in the groove 4, the rubber ring 3 is compressed in the inner peripheral direction thus deforming and expanding in the direction of the axis x. Due to such deformation of the rubber ring 3 in the direction of the axis x caused by the pressing, portions of the front side inclined surface 31 and the rear side inclined surface 32 of the rubber ring 3 which are in contact with the frontwardly-inclined surface 16 and the rearwardly-inclined surface 26 of the groove 4 in a state where power is not transmitted are further pushed against the frontwardly-inclined surface 16 and the rearwardly-inclined surface 26. Accordingly, a pushing force is further generated at the front side inclined surface 31 and the rear side inclined surface 32 in addition to a generated pushing force applied to the frontwardly-inclined surface 16 and the rearwardly-inclined surface 26, in a state where power is not transmitted. Further, the pair of the frontwardly-inclined surface 16 and the rearwardly-inclined surface 26 of the groove 4 extend obliquely toward the inner periphery side in a V shape where a distance between the frontwardly-inclined surface 16 and the rearwardly-inclined surface 26 decreases. Due to pressure exerted against the rubber ring 3, the rubber ring 3 is pushed into a narrower portion of the groove 4 and hence, the rubber ring 3 is further compressed whereby a pushing force is further generated on the front side inclined surface 31 and the rear side inclined surface 32. Accordingly, the friction pulley 1 can generate a larger pushing force against the frontwardly-inclined surface 16 and the rearwardly-inclined surface 26.

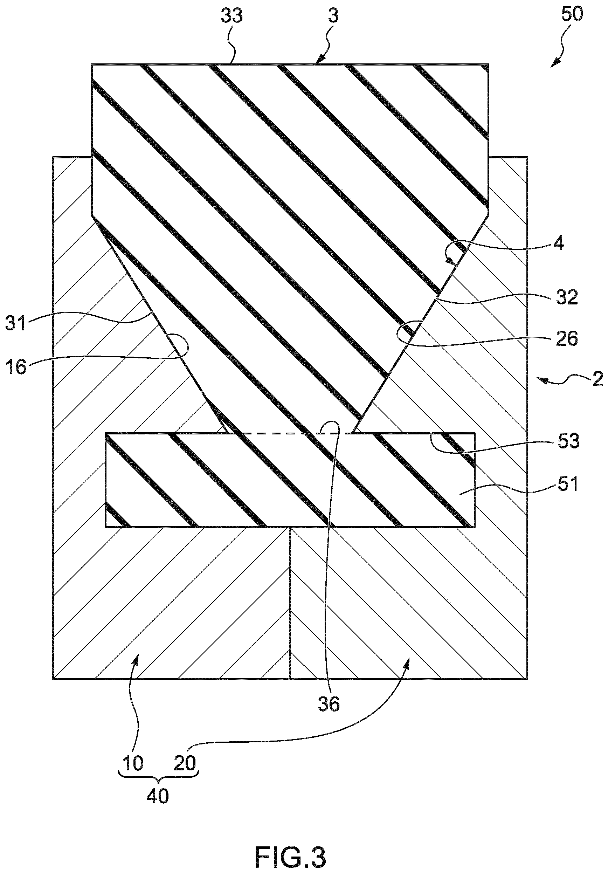

Thereafter, with reference to Fig. 3 to Fig. 7, embodiments are described which are obtained by further modifying the embodiment described above with reference to Fig. 1 and Fig. 2.

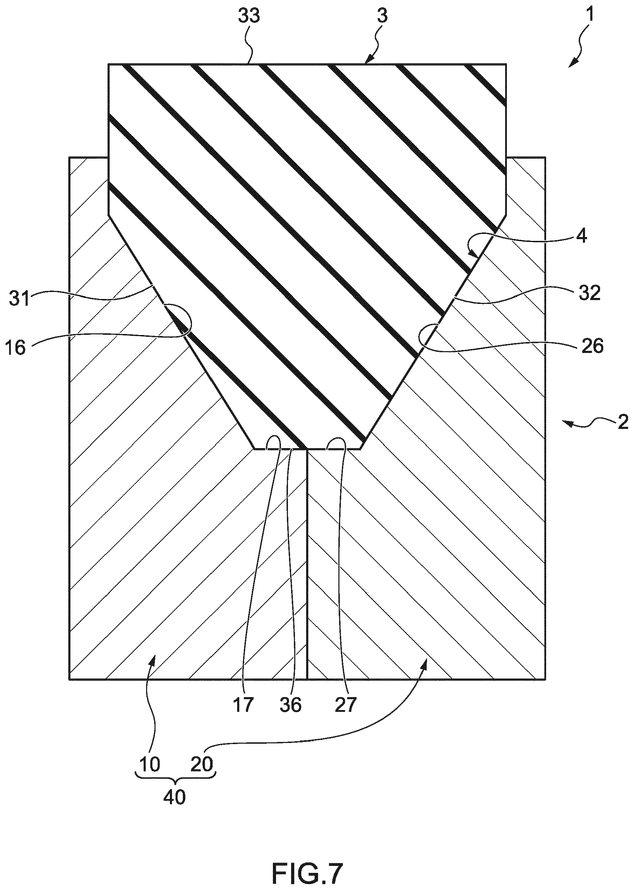

Fig. 7 is a view schematically showing an upper portion of the friction pulley 1 of the above-mentioned embodiment described with reference to Fig. 1 and Fig. 2. In Fig. 7, an example is shown where a groove 4 has a substantially V shape, reference numeral 40 indicates a disk as a rotary wheel, and the disk 40 is formed of a front disk 10 and a rear disk 20 which are split into a split body. In modified embodiments described hereinafter, a shape of the groove 4 is not limited to a substantially V shape, and may be another shape such as a rectangular shape, for example. Further, it is not limited to an example where the disk 40 is formed of the front disk 10 and the rear disk 20 each of which is a split body, and the disk 40 may be formed of a single integral body. Further, the disk 40 may have a plurality of rubber rings 3 and a plurality of grooves 4. In this case, when the disk 40 is formed of splittable disks, the disk 40 is formed of a plurality of disks which are divided depending on the number of grooves 4.

With respect to the embodiment described above with reference to Fig. 1 and Fig. 2, the following problems may be predicted.

Assume a case where, to transmit power to a rotary member not shown in the drawing, the rotary member is a counterpart member to which power is transmitted, the friction pulley 1 shown in Fig. 7 is rotationally driven so that the outer peripheral surface 33 of the friction pulley 1 rotates the rotary member as the counter member while pressing against the rotary member, thus transmitting power to the rotary member. In this case, a frictional force is generated between the frontwardly-inclined surface 31 and the rearwardly-inclined surface 32 of the rubber ring 3, which is stored in the groove 4 in a state of being compressed, and the frontwardly-inclined surface 16 and the rearwardly-inclined surface 26 of the groove 4. Due to such a frictional force, the rubber ring 3 rotates integrally with the disk 40 while pressing the rotary member as the counterpart member with the outer peripheral surface 33 of the friction pulley 1. Accordingly, power is transmitted to the rotary member.

In this situation, there may be a case where completely integral rotational movement of the rubber ring 3 and the disk 40 as a rotary body is not maintained. It is predicted that such a case may be caused particularly when a rotational speed of the friction pulley 1 changes frequently. In this case, there is a possibility of occurrence of a phenomenon whereby the rubber ring 3 separates from the groove 4 so that the rubber ring 3 floats from the disk 40 on the downstream side in the rotational direction whereby the rubber ring 3 deflects.

Thereafter, with reference to Fig. 3, a friction pulley 50 according to the first modified embodiment is described which suppresses separation of a rubber ring 3. The friction pulley 50 includes a separation preventing device which prevents the separation of the rubber ring 3 from the groove 4 in the outward direction (the direction indicated by an arrow "a"). Hereinafter, identical and similar configurations are given the same reference numerals, and the description of such configurations is omitted. The description is made only with respect to different configurations.

As shown in Fig. 3, the rubber ring 3 of the friction pulley 50 includes an embedded portion 51 as an anchor portion which forms the separation preventing device. The embedded portion 51 is formed on the inner periphery side of the inner peripheral surface 36 of the rubber ring 3 (see Fig. 7) integrally with other portions of the rubber ring 3 as a portion of the rubber ring 3. The embedded portion 51 is formed into an annular shape about the axis x and, as shown in Fig. 3, is formed so as to be a long narrow rectangular shape extending in the direction of the axis x in a cross section. The embedded portion 51 may be formed into an annular shape in the same manner as other portions of the rubber ring 3. Alternatively, instead of forming the embedded portion 51 into an annular shape which is continuous and endless, for example, the embedded portion 51 may be formed so as to extend at a part of the inner peripheral surface 36 in the circumferential direction of the inner peripheral surface 36, and a plurality of embedded portions 51 may be distributed at equal angular intervals.

An accommodating portion 53 as an anchor accommodating portion which extends from the groove 4 and forms the separation preventing device is formed on the disk 40 such that the accommodating portion 53 is formed into a shape which allows accommodation of the embedded portion 51. The accommodating portion 53 is formed so as to allow accommodation of the embedded portion 51 such that the accommodating portion 53 can lock the embedded portion 51 on the outer periphery side. The accommodating portion 53 is a space formed into an annular shape about the axis x. As shown in Fig. 3, in the same manner as the embedded portion 51, the accommodating portion 53 is formed so as to extend in a long narrow rectangular shape extending in the direction of the axis x in cross section. In the friction pulley 50, the embedded portion 51 is accommodated in the accommodating portion 53 as shown in Fig. 3. The embedded portion 51 is formed so as to extend in a long narrow rectangular shape extending in the direction of the axis x in cross section and hence, even when the rubber ring 3 is pulled in the outer peripheral direction (the direction indicated by an arrow "a"), the embedded portion 51 accommodated in the accommodating portion 53 is not easily removed from the accommodating portion 53.

When the disk 40 is formed of the front disk 10 and the rear disk 20 each of which is a split body, the front disk 10 and the rear disk 20 are formed such that the rubber ring 3 is clamped between the front disk 10 and the rear disk 20 so as to accommodate the embedded portion 51 in the accommodating portion 53. With such a configuration, the friction pulley 50 can be assembled more easily.

As has been described heretofore, according to the first modified embodiment, the friction pulley 50 includes the embedded portion 51 and the accommodating portion 53 for accommodating the embedded portion 51 as the separation preventing device, and the embedded portion 51 is formed so as not to be easily removed from the accommodating portion 53 even when the rubber ring 3 is pulled in the outer peripheral direction. Accordingly, separation of the rubber ring 3 from the groove 4 can be eliminated so that the rubber ring 3 and the disk 40 can always integrally rotate. Therefore, also when a rotational speed of the friction pulley 50 changes frequently, it is possible to eliminate the possibility of occurrence of a phenomenon where the outer peripheral surface 33 of the rubber ring 3 floats from the disk 40 and deflects on the downstream side in the rotational direction.

Further, in the friction pulley 50, the rubber ring 3 includes the embedded portion 51 thus being brought into contact with the disk 40 with a larger contact area. Accordingly, a frictional force generated between the rubber ring 3 and the disk 40 can be increased so that the rubber ring 3 and the disk 40 can integrally rotate.

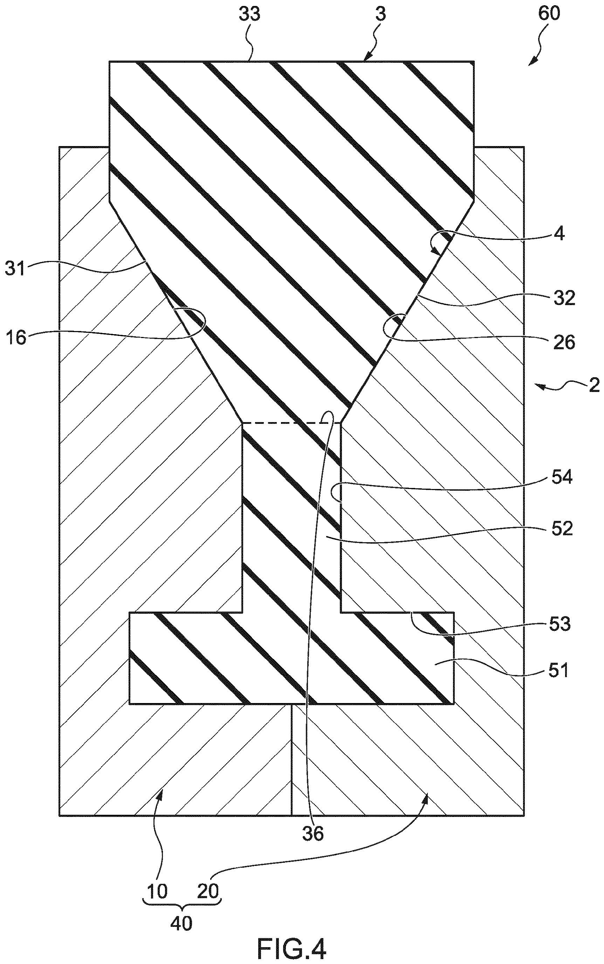

Thereafter, a friction pulley 60 according to the second modified embodiment is described with reference to Fig. 4.

As shown in Fig. 4, a rubber ring 3 of the friction pulley 60 further includes a rib portion 52 in addition to the embedded portion 51 shown in Fig. 3. The rib 52 is formed into an annular shape about the axis x and, as shown in Fig. 4, is formed so as to extend in a long narrow rectangular shape extending in the direction orthogonal to the direction of the axis x in cross section. A portion of the rib portion 52 on the outer periphery side is connected to the inner peripheral surface 36 of the rubber ring 3 (see Fig. 7), and a portion of the rib portion 52 on the inner periphery side is connected to a portion of the embedded portion 51 on the outer periphery side. The rib portion 52 and the embedded portion 51 are formed integrally with other portions of the rubber ring 3, as portions of the rubber ring 3. In the same manner as other portions of the rubber ring 3, the rib portion 52 and the embedded portion 51 may be formed into an annular shape. Alternatively, instead of forming the embedded portion 51 and the rib portion 52 into an annular shape which is continuous and endless, for example, the embedded portion 51 and the rib portion 52 may be respectively formed so as to extend at a part of the inner peripheral surface 36 in the circumferential direction of the inner peripheral surface 36, and the embedded portions 51 and the rib portions 52 may be respectively distributed at equal angular intervals.

An accommodating portion 54 as a rib accommodating portion and an accommodating portion 53 are formed in the disk 40 so as to extend from the groove 4. The accommodating portion 54 as the rib accommodating portion forms a space formed into a shape allowing accommodation of the rib portion 52, and the accommodating portion 53 forms a space formed into a shape allowing accommodation of the embedded portion 51.

In the same manner as the case shown in Fig. 3, the embedded portion 51 is formed into a long narrow rectangular shape extending in the direction of the axis x in cross section and hence, even when the rubber ring 3 is pulled in the outer peripheral direction (the direction indicated by an arrow "a"), the embedded portion 51 accommodated in the accommodating portion 53 is not easily removed from the accommodating portion 53. Further, the embedded portion 51 is connected to the inner peripheral surface 36 of the rubber ring 3 by way of the rib portion 52 (see Fig. 7) and hence, a strut-like effect for preventing the embedded portion 51 accommodated in the accommodating portion 53 from being removed from the accommodating portion 53 is transmitted to the inner peripheral surface 36 and the outer peripheral surface 33 of the rubber ring 3 through the rib portion 52.

In the same manner as the friction pulley 50 shown in Fig. 3, when the disk 40 is formed of the front disk 10 and the rear disk 20, each of which is a split body, the friction pulley 60 can be easily assembled.

As has been described heretofore, according to the second modified embodiment, in the same manner as the friction pulley 50, the friction pulley 60 includes the embedded portion 51 and the accommodating portion 53 for accommodating the embedded portion 51 as a separation preventing device, and the embedded portion 51 is formed so as not to be easily removed from the accommodating portion 53 even when the rubber ring 3 is pulled in the outer peripheral direction. Accordingly, separation of the rubber ring 3 from the groove 4 can be suppressed so that the rubber ring 3 and the disk 40 can always integrally rotate. Therefore, also when a rotational speed of the friction pulley 60 frequently changes, it is possible to eliminate the possibility of occurrence of a phenomenon where the rubber ring 3 deflects from the disk 40 on the downstream side in the rotational direction.

Further, the rubber ring 3 of the friction pulley 60 includes the rib portion 52, and the embedded portion 51 is connected to the inner peripheral surface 36 of the rubber ring 3 by way of the rib portion 52 (see Fig. 7). Accordingly, a strut-like force of the embedded portion 51 for preventing the embedded portion 51 accommodated in the accommodating portion 53 from being removed from the accommodating portion 53 is not directly transmitted but is non-rigidly transmitted to the inner peripheral surface 36 and the outer peripheral surface 33 of the rubber ring 3 from the embedded portion 51 through the rib portion 52. As a result, it is possible to avoid the formation of a stress concentration portion, where a stress is excessively and locally concentrated, at a portion of the rubber ring 3 in the vicinity of the outer peripheral surface 33 or the like and hence, longer life of the rubber ring 3 can be achieved.

Further, the rubber ring 3 of the friction pulley 60 includes the rib portion 52. Accordingly, the distance from the accommodating portion 53 to the rubber ring 3 accommodated in the groove 4 is increased and hence, a geometrical moment of inertia of the rubber ring 3 accommodated in the groove 4 in the direction of deflection can be increased so that rigidity of the rubber ring 3 can be enhanced. As a result, it is possible to make the rubber ring 3 accommodated in the groove 4 not easily deflect.

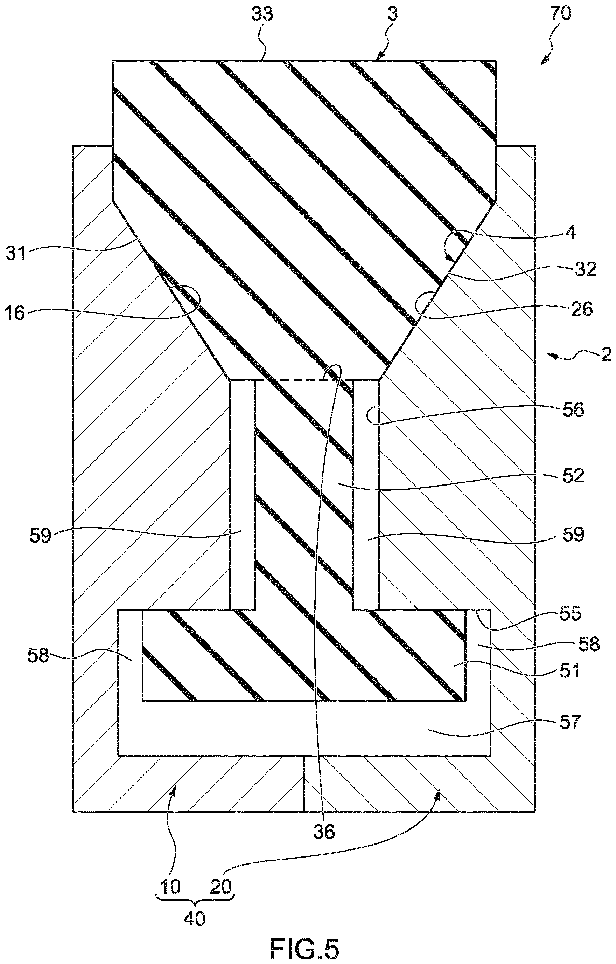

Thereafter, a friction pulley 70 according to the third modified embodiment is described with reference to Fig. 5.

As shown in Fig. 5, compared to the friction pulley 60 shown in Fig. 4, the friction pulley 70 differs from the friction pulley 60 with respect to a point that an accommodating portion 55 is formed in place of the accommodating portion 53 for accommodating the embedded portion 51, and an accommodating portion 56 is formed in place of the accommodating portion 54 for accommodating the rib portion 52.

The accommodating portion 55 accommodates the embedded portion 51 such that a gap 57 is formed on the inner periphery side between the accommodating portion 55 and the embedded portion 51 and gaps 58 are formed on both sides in the direction of the axis x and, on the outer periphery side, the accommodating portion 55 is brought into contact with a surface of the embedded portion 51 on the outer periphery side. As described above, when the embedded portion 51 is pulled toward the outer periphery side, the embedded portion 51 is caught by the accommodating portion 55. Further, the accommodating portion 56 accommodates the rib portion 52 with gaps 59 formed between the accommodating portion 56 and the rib portion 52 on both sides in the direction of the axis x. As described above, the rib portion 52 is accommodated in the embedded portion 56 completely without being constrained.

As has been described heretofore, according to the friction pulley 70 of the third modified embodiment, in addition to advantageous effects equal or similar to the advantageous effects of the friction pulley 60 according to the second modified embodiment, the following advantageous effects can be further achieved.

That is, in the friction pulley 70, the rib portion 52 is accommodated in the accommodating portion 56 with the gaps 59 without being constrained. Further, the embedded portion 51 is accommodated in the accommodating portion 55 such that the embedded portion 51 is locked by the accommodating portion 55 on the outer periphery side, and the gap 57 is formed on the inner periphery side and the gaps 58 are formed on both sides in the direction of the axis x. Accordingly, a strut-like force of the embedded portion 51 for preventing the embedded portion 51 accommodated in the accommodating portion 55 from being removed from the accommodating portion 55 is not directly transmitted but is transmitted in a more non-rigid manner compared to the case of the friction pulley 60, to the inner peripheral surface 36 and the outer peripheral surface 33 of the rubber ring 3 from the embedded portion 51 through the rib portion 52. As a result, compared to the case of the friction pulley 60, the friction pulley 70 can more reliably avoid the formation of a stress concentration portion, where a stress is excessively and locally concentrated at a portion of the rubber ring 3 in the vicinity of the outer peripheral surface 33 or the like and hence, longer life of the rubber ring 3 can be achieved.

Further, the rib portion 52 is accommodated in the accommodating portion 56 with the gaps 59. Further, the embedded portion 51 is accommodated in the accommodating portion 55 with the gap 57 and the gaps 58. Accordingly, also when the rubber ring 3 has slight manufacturing variations in shape or size, no problems arise.

The friction pulley 50 according to the first modified embodiment is effectively applicable to a case where a transmission force is small as in the case of a water pump, for example. On the other hand, the friction pulley 70 according to the third modified embodiment is particularly effectively applicable to a case where a transmission force transmitted by the friction pulley 70 is large. In the friction pulley 70, when the rubber ring 3 is brought into pressure contact with a rotary member thus being pressed from the outer periphery side, a portion of the rubber ring 3 can escape into the gaps 57, 58, 59 and hence, it is possible to avoid a state where the rubber ring 3 is excessively compressed. Accordingly, the friction pulley 70 is particularly effectively applicable to a case where a transmission force is large.

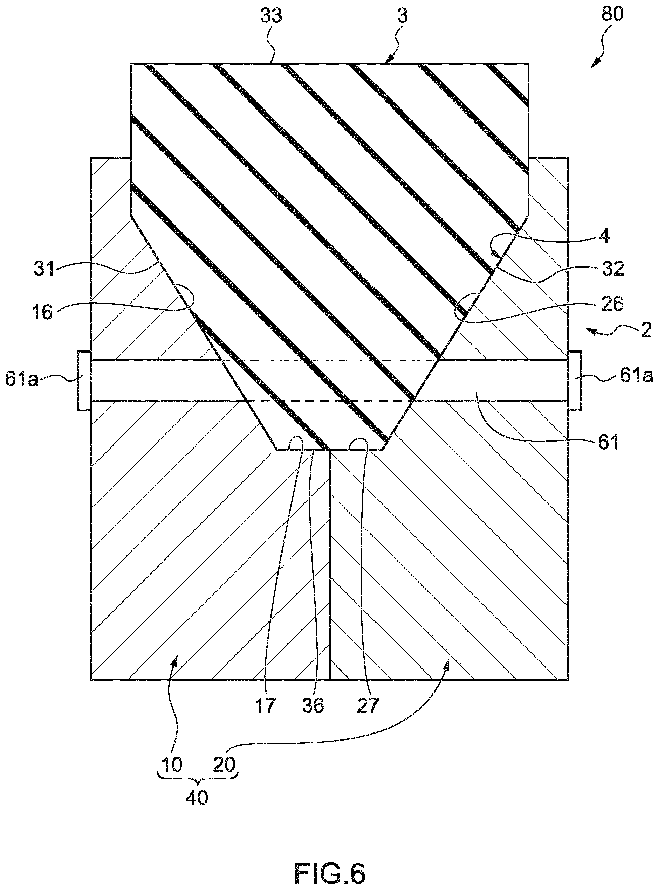

Thereafter, a friction pulley 80 according to the fourth modified embodiment is described with reference to Fig. 6. The present embodiment includes pin members 61 forming a separation preventing device which prevents the separation of the rubber ring 3 from the groove 4 in the outward direction.

As shown in Fig. 6, the pin member 61 made of metal or a resin, for example, penetrates the rubber ring 3 in the direction of the axis x, and the pin member 61 is attached to both side surfaces of the disk 40 by fasteners 61a. The pin member 61 has the fasteners 61a at both ends of the pin member 61. The rubber ring 3 is attached to both side surfaces of the disk 40 by a plurality of pin members 61 at a plurality of places disposed at equal angular intervals, for example. As a rubber material for forming the rubber ring 3, it is preferable to use a rubber material with high strength so as to prevent breakage of the rubber ring 3 even when the rubber ring 3 is pulled by the pin members 61 which penetrate the rubber ring 3. As a rubber material with high strength, for example, urethane rubber or hydrogenated nitrile rubber (H-NBR) can be named.

As has been described heretofore, according to the friction pulley 80 of the fourth modified embodiment, the rubber ring 3 is attached to the disk 40 by the pin members 61 which penetrate the rubber ring 3. Accordingly, the separation of the inner peripheral surface 36 of the rubber ring 3 from the stepped surfaces 17, 27 of the groove 4 can be suppressed so that the rubber ring 3 and the disk 40 can always integrally rotate. For this reason, also when a rotational speed of the friction pulley 80 frequently changes, it is possible to eliminate the possibility of occurrence of a phenomenon where the outer peripheral surface 33 of the rubber ring 3 deflects from the disk 40 on the downstream side in the rotational direction.

In the above-mentioned description, a shape of the groove 4 of the base body 2 is not limited to the above-mentioned substantially V shape. For example, the frontwardly-inclined surface 16 of the front stepped portion 11 of the front disk 10 and the rearwardly-inclined surface 26 of the rear stepped portion 21 of the rear disk 20 may not have a conical surface shape, and may have a shape having a curved profile in cross section taken along the axis x. Further, a shape of the rubber ring 3 is also not limited to a substantially V shape corresponding to the groove 4 of the base body 2. For example, the front side inclined surface 31 and the rear side inclined surface 32 of the rubber ring 3 may not have a conical surface shape, and may have a shape having a curved profile in cross section taken along the axis x. Further, a cross-sectional shape of the groove 4 of the base body 2 may be a U shape, a rectangular shape or a circular arc shape. A cross-sectional shape of the rubber ring 3 may also be a U shape, a rectangular shape or a circular shape. The outer peripheral surface 33 of the rubber ring 3 may have a curved shape where a center portion projects toward the outer periphery side. Further, the rubber ring may not have a compression margin, or may partially have a compression margin. With such a configuration, at the time of transmitting power, the rubber ring 3 may be pushed against the groove 4 so that the front side inclined surface 31 and the rear side inclined surface 32 of the rubber ring 3 may be pushed against the frontwardly-inclined surface 16 of the groove 4 and the rearwardly-inclined surface 26 of the rear stepped portion 21 whereby a desired frictional force may be generated between the frontwardly-inclined surface 31 and the frontwardly-inclined surface 16 and between the rearwardly-inclined surface 32 and the rear stepped portion 21.

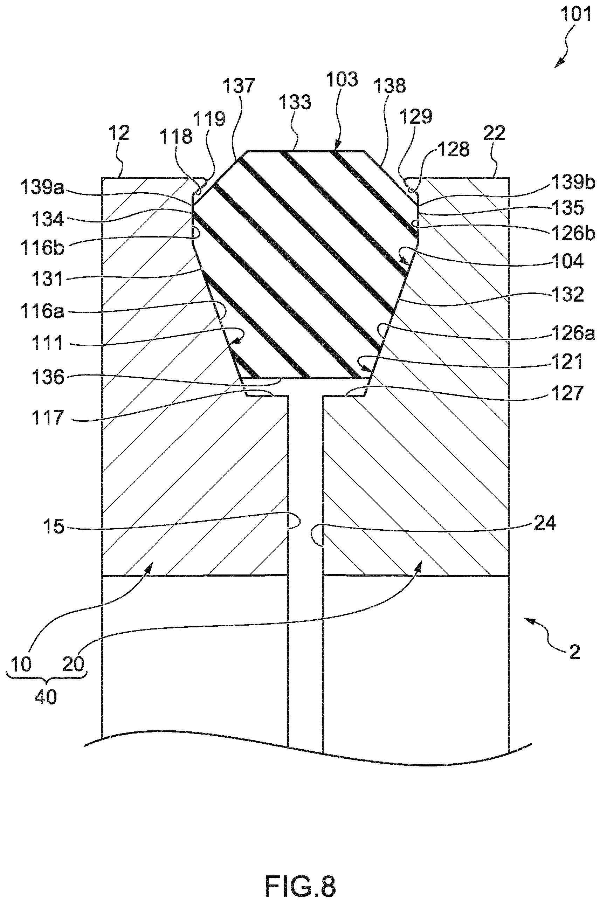

Thereafter, with reference to Fig. 8 to Fig. 10, embodiments are described which are obtained by further modifying the embodiment described above with reference to Fig. 1 and Fig. 2. Each of the friction pulleys according to the following modified embodiments include protrusion preventing projections which prevent the rubber ring 3 from becoming displaced in the radial direction (see arrow "a" and arrow "b" in Figs. 1, 2), thus protruding from the groove 4. Hereinafter, configurations equal or similar to the corresponding configurations of the friction pulley 1 according to the embodiment described above are given the same reference numerals, and the description of such configurations is omitted. The description is made only with respect to configurations different from the embodiment.

First, with reference to Fig. 8, a friction pulley 101 according to the fifth modified embodiment which includes a protrusion preventing projection is described. Fig. 8 is an exploded partial cross-sectional view, taken along with the axis, of an upper portion of the friction pulley 101 according to the fifth modified embodiment of the present invention showing a schematic configuration of the friction pulley 101.

As shown in Fig. 8, a front disk 10 and a rear disk 20 of a disk 40 include a front stepped portion 111 and a rear stepped portion 121 respectively. The front stepped portion 111 and the rear stepped portion 121 face each other thus forming a groove 104 in an annular shape.

At a portion disposed on the outer periphery side of the inner side surface 15, the front stepped portion 111 is recessed toward the outside (front side), and expands between an outer-peripheral-side end of the inner side surface 15 and an inner (rear) end of the outer peripheral surface 12. To be more specific, the front stepped portion 111 has: a left groove inclined surface 116a which is an inclined surface inclined toward the outside; a left groove side surface 116b which is a surface extending between the left groove inclined surface 116a and the outer peripheral surface 12; and a stepped surface 117 which is a surface extending between the inner side surface 15 and the left groove inclined surface 116a. In addition, the front stepped portion 111 includes the protrusion preventing projection 119 which projects in the direction of the axis x. The protrusion preventing projection 119 is formed such that a portion of the left groove side surface 116b projects toward the inside thus forming a flange surface 118 which is an inclined surface inclined toward the outer periphery side from the left groove side surface 116b. The protrusion preventing projection 119, for example, as shown in Fig. 8, continues from the outer peripheral surface 12, and is formed at an end portion of the left groove side surface 116b on the outer periphery side.

At a portion disposed on the outer periphery side of the inner side surface 24, the rear stepped portion 121 is recessed toward the outside (rear side), and expands between an outer-peripheral-side end of the inner side surface 24 and an inner (front) end of the outer peripheral surface 22. To be more specific, the rear stepped portion 121 has: a right groove inclined surface 126a which is an inclined surface inclined toward the outside; a right groove side surface 126b which is a surface extending between the right groove inclined surface 126a and the outer peripheral surface 22; and a stepped surface 127 which is a surface extending between the inner side surface 24 and the right groove inclined surface 126a. In addition, the rear stepped portion 121 includes the protrusion preventing projection 129 which projects in the direction of the axis x. The protrusion preventing projection 129 is formed such that a portion of the right groove side surface 126b projects toward the inside thus forming a flange surface 128 which is an inclined surface inclined toward the outer periphery side from the right groove side surface 126b. The protrusion preventing projection 129, for example, as shown in Fig. 8, continues from the outer peripheral surface 22, and is formed at an end portion of the right groove side surface 126b on the outer periphery side.

The rubber ring 103 attached to the outer periphery of the base body 2 as the rotary wheel has tapered surfaces 137, 138 which are formed by cutting away both corner portions on the outer periphery side which are respectively formed between the outer peripheral surface 33 of the above-mentioned rubber ring 3 and the front-side side surface 34 and between the outer peripheral surface 33 of the above-mentioned rubber ring 3 and the rear-side side surface 35. To be more specific, the rubber ring 103 has a shape which corresponds to the groove 104 of the base body 2 on the inner periphery side. The rubber ring 103 has: a left inclined surface 131 and a right inclined surface 132 in a substantially conical surface shape on side surfaces thereof on the front side (left side) and the rear side (right side); an outer peripheral surface 133 which is a surface in an annular shape; a front-side side surface 134 and a rear-side side surface 135 which are surfaces respectively extending toward the outer periphery side from the left inclined surface 131 and the right inclined surface 132; an inner peripheral surface 136 which is a surface extending more on the inner periphery side than the outer peripheral surface 133; and the tapered surfaces 137, 138 which are inclined surfaces respectively extending between the outer peripheral surface 133 and the front-side side surface 134 and between the outer peripheral surface 133 and the rear-side side surface 135, and which are inclined surfaces respectively inclined.

In the above-mentioned friction pulley 101, the left inclined surface 131 and the front-side side surface 134 of the rubber ring 103 respectively correspond to the left groove inclined surface 116a and the left groove side surface 116b of the groove 104. The right inclined surface 132 and the rear-side side surface 135 of the rubber ring 103 respectively correspond to the right groove inclined surface 126a and the right groove side surface 126b of the groove 104. Further, a contact surface pressure of a predetermined pressure is generated on contact surfaces between the groove 104 and the rubber ring 103 (between the left inclined surface 131 and the left groove inclined surface 116a, between the front-side side surface 134 and the left groove side surface 116b, between the right inclined surface 132 and the right groove inclined surface 126a, between the rear-side side surface 135 and the right groove side surface 126b).

The protrusion preventing projections 119, 129 are formed such that, in a state where the above-mentioned rubber ring 103 is accommodated in the groove 104, an intersecting portion 139a, which is a portion of the rubber ring 103 where the front-side side surface 134 and the tapered surface 137 intersect with each other, and an intersecting portion 139b, which is a portion of the rubber ring 103 where the rear-side side surface 135 and the tapered surface 138 intersect with each other, are respectively positioned at positions in the direction of the axis x where the left groove side surface 116b and the right groove side surface 126b of the groove 104 expand. Further, the left groove side surface 116b and the right groove side surface 126b are respectively positioned within a range below the flange surfaces 118, 128 in the radial direction and where at least the flange surfaces 118,128 expand in the direction of the axis x. With such a configuration, even when the rubber ring 103 is displaced in the radial direction, the intersecting portions 139a, 139b and the tapered surfaces 137, 138 of the rubber ring 103 abut the protrusion preventing projections 119, 129.

As has been described heretofore, according to the friction pulley 101 of the fifth modified embodiment, in addition to advantageous effects equal or similar to the advantageous effects of the friction pulley 1 according to the embodiment described above, the following advantageous effects can be achieved.

In the friction pulley 101, the protrusion preventing projections 119, 129 as a separation preventing device are formed on the groove 104. Accordingly, when the rubber ring 103 is displaced in the radial direction, the rubber ring 103 is brought into contact with the protrusion preventing projections 119, 129 from the inner periphery side. With such a configuration, it is possible to make it difficult for the rubber ring 103 to be removed from the groove 104.

Further, in the friction pulley 101, the protrusion preventing projections 119, 129 project in the direction of the axis x on the outer periphery side of the groove 104 and are brought into contact with the rubber ring 103 from the outer periphery side. Accordingly, when the rubber ring 103 is brought into pressure contact with a rotary member, depression of the rubber ring 103 toward the inner periphery side in the groove 104 is not suppressed. Accordingly, the protrusion preventing projections 119, 129 can prevent the removal of the rubber ring 103 while maintaining an effect of increasing a transmission force brought about by depression of the rubber ring 103 into the groove 104.

Further, in the friction pulley 101, the protrusion preventing projections 119, 129 are formed by making the protrusion preventing projections 119, 129 project in the direction of the axis x from the outer peripheral surfaces 12, 22. Accordingly, it is not necessary to additionally provide a member to make it difficult for the rubber ring 103 to be removed from the groove 104. Further, the friction pulley 101 can be easily assembled.

In the above-mentioned friction pulley 101, the left groove side surface 116b, the right groove side surface 126b, the front-side side surface 134 and the rear-side side surface 135 may not be formed. That is, in the front stepped portion 111, the flange surface 118 may extend from the left groove inclined surface 116a, in the rear stepped portion 121, the flange surface 128 may extend from the right groove inclined surface 126a, and in the rubber ring 103, the tapered surface 137 may extend from the left inclined surface 131 and the tapered surface 138 may extend from the right inclined surface 132.

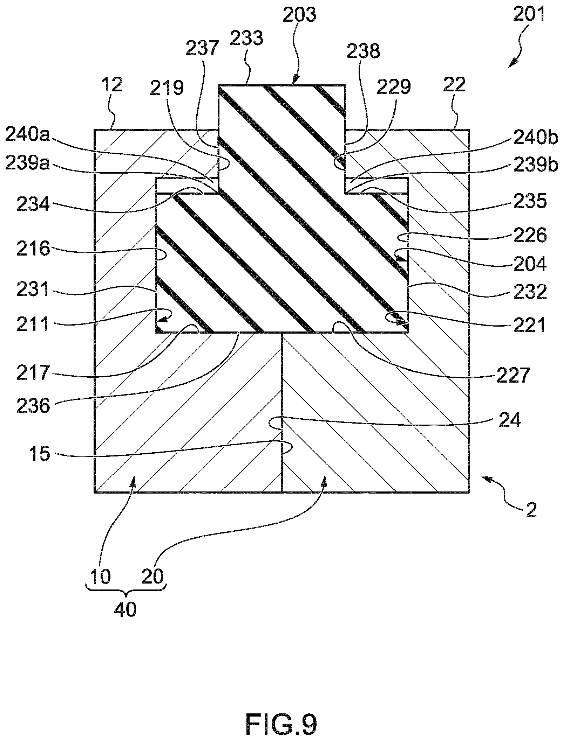

Thereafter, with reference to Fig. 9, a friction pulley 201 according to the sixth modified embodiment which includes protrusion preventing projections is described. Fig. 9 is a cross-sectional view, taken along the axis, of an upper portion of the friction pulley 201 according to the sixth modified embodiment of the present invention showing a schematic configuration of the friction pulley 201.

As shown in Fig. 9, a front disk 10 and a rear disk 20 of a disk 40 include a front stepped portion 211 and a rear stepped portion 221 respectively. The front stepped portion 211 and the rear stepped portion 221 face each other thus forming a groove 204 in an annular shape.

At a portion disposed on the outer periphery side of the inner side surface 15, the front stepped portion 211 is recessed toward the outside (front side), and expands between an outer-peripheral-side end of the inner side surface 15 and an inner (rear) end of the outer peripheral surface 12. To be more specific, the front stepped portion 211 has: a left groove side surface 216 which is a surface extending from the inner periphery side toward the outer periphery side; a stepped surface 217 which is a surface extending between the inner side surface 15 and the left groove side surface 216; and the protrusion preventing projection 219 as a separation preventing device. The protrusion preventing projection 219 is formed such that a portion of the left groove side surface 216 projects toward the inside. The protrusion preventing projection 219 is, for example, as shown in Fig. 9, formed at an end portion of the left groove side surface 216 on the outer periphery side.

At a portion disposed on the outer periphery side of the inner side surface 24, the rear stepped portion 221 is recessed toward the outside (rear side), and expands between an outer-peripheral-side end of the inner side surface 24 and an inner (front) end of the outer peripheral surface 22. To be more specific, the rear stepped portion 221 has: a right groove side surface 226 which is a surface extending from the inner periphery side toward the outer periphery side; a stepped surface 227 which is a surface extending between the inner side surface 24 and the right groove side surface 226; and the protrusion preventing projection 229 as a separation preventing device. The protrusion preventing projection 229 is formed such that a portion of the right groove side surface 226 projects toward the inside. The protrusion preventing projection 229 is, for example, as shown in Fig. 9, formed at an end portion of the right groove side surface 226 on the outer periphery side.

The rubber ring 203 attached to the outer periphery of the base body 2 as a rotary wheel has cut-away side surfaces 237,238 which are formed by cutting away both corner portions on the outer periphery side which are respectively formed between the outer peripheral surface 33 of the above-mentioned rubber ring 3 and the front-side side surface 34 and between the outer peripheral surface 33 of the above-mentioned rubber ring 3 and the rear-side side surface 35. Further, the cut-away side surfaces 237, 238 are formed such that the protrusion preventing projections 219, 229 abut on the cut-away side surfaces 237, 238 in the direction of the axis x. To be more specific, the rubber ring 203 has a shape corresponding to the groove 204 of the base body 2 on the inner periphery side. The rubber ring 203 has: a left side surface 231 and a right side surface 232 in a substantially circular annular surface shape on side surfaces thereof on the front side and the rear side; an outer peripheral surface 233 which is a surface in an annular shape; projection abutting surfaces 234, 235 which are surfaces respectively extending toward the rear side and the front side from upper end portions of the left side surface 231 and the right side surface 232; an inner peripheral surface 236 which is a surface extending more on the inner periphery side than the outer peripheral surface 233; and the cut-away side surfaces 237, 238 which respectively extend toward the outer periphery side from the projection abutting surfaces 234, 235. The cut-away side surfaces 237, 238 are surfaces formed by cutting away portions of the rubber ring 203 so as to form the projection abutting surfaces 234, 235.

In the above-mentioned friction pulley 201, a groove portion 239a which is a space in an annular shape is formed by the projection abutting surface 234 and the cut-away side surface 237. Further, a groove portion 239b which is a space in an annular shape is formed by the projection abutting surface 235 and the cut-away side surface 238. In the friction pulley 201, the groove portions 239a, 239b are formed such that the protrusion preventing projections 219, 229 are respectively positioned in the groove portions 239a, 239b. To be more specific, the groove portions 239a, 239b are formed such that the protrusion preventing projections 219, 229 are positioned in the groove portions 239a, 239b so as to be brought into contact with the projection abutting surfaces 234, 235 from the inner periphery side.

In the above-mentioned friction pulley 201, the left side surface 231 of the rubber ring 203 corresponds to the left groove side surface 216 of the groove 204, and the right side surface 232 of the rubber ring 203 corresponds to the right groove side surface 226 of the groove 204. Further, a contact surface pressure of a predetermined pressure is generated on contact surfaces between the groove 204 and the rubber ring 203 (between the left groove side surface 216 and the left side surface 231, between the right groove side surface 226 and the right side surface 232).

The front stepped portion 211 and the rear stepped portion 221 accommodate the rubber ring 203 in the groove 204 with gaps 240a, 240b respectively formed between the projection abutting surface 234 and the protrusion preventing projection 219 and between the projection abutting surface 235 and the protrusion preventing projection 229. Accordingly, even when the rubber ring 203 has slight manufacturing variations in shape or size, this will not present a problem. Further, when the rubber ring 203 is brought into pressure contact with a rotary member thus being pressed from the outer periphery side, a portion of the rubber ring 203 can escape into the gaps 240a, 240b and hence, it is possible to avoid a state where the rubber ring 203 is excessively compressed.

As has been described heretofore, according to the friction pulley 201 of the sixth modified embodiment, in addition to advantageous effects equal or similar to advantageous effects of the friction pulley 1 according to the embodiment described above, the following advantageous effects can be achieved.

In the friction pulley 201, the protrusion preventing projections 219, 229 as a separation preventing device are formed on the groove 204. Accordingly, when the rubber ring 203 is displaced in the radial direction, the rubber ring 203 is brought into contact with the protrusion preventing projections 219, 229 from the inner periphery side. With such a configuration, it is possible to prevent the rubber ring 203 from being easily removed from the groove 204.

Further, in the friction pulley 201, the protrusion preventing projections 219, 229 project in the direction of the axis x on the outer periphery side of the groove 204, and are arranged to be brought into contact with the rubber ring 203 from the outer periphery side. Accordingly, when the rubber ring 203 is brought into pressure contact with a rotary member, depression of the rubber ring 203 toward the inner periphery side in the groove 204 is not suppressed. Accordingly, the protrusion preventing projections 219, 229 can prevent the removal of the rubber ring 203 while maintaining an effect of increasing a transmission force brought about by depression of the rubber ring 203 into the groove 204.

Further, in the friction pulley 201, the protrusion preventing projections 219, 229 are formed by making the protrusion preventing projections 219, 229 project in the direction of the axis x from the outer peripheral surfaces 12, 22. Accordingly, it is not necessary to additionally provide a member for preventing the rubber ring 203 from being easily removed from the groove 204. Further, the friction pulley 201 can be easily assembled.

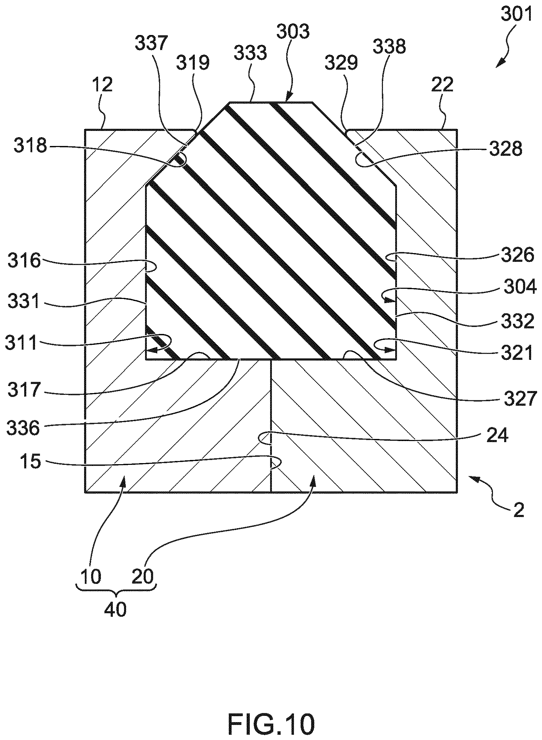

Thereafter, with reference to Fig. 10, a friction pulley 301 according to the seventh modified embodiment which includes protrusion preventing projections is described. Fig. 10 is a cross-sectional view, taken along the axis, of an upper portion of the friction pulley 301 according to the seventh modified embodiment of the present invention showing a schematic configuration of the friction pulley 301.

As shown in Fig. 10, a front disk 10 and a rear disk 20 of a disk 40 include a front stepped portion 311 and a rear stepped portion 321 respectively. The front stepped portion 311 and the rear stepped portion 321 face each other thus forming a groove 304 in an annular shape.

At a portion disposed on the outer periphery side of the inner side surface 15, the front stepped portion 311 is recessed toward the outside (front side), and expands between an outer-peripheral-side end of the inner side surface 15 and an inner (rear) end of the outer peripheral surface 12. To be more specific, the front stepped portion 311 has: a left groove side surface 316 which is a surface extending from the inner periphery side toward the outer periphery side; a stepped surface 317 which is a surface extending between the inner side surface 15 and the left groove side surface 316; and a protrusion preventing projection 319 as a separation preventing device. The protrusion preventing projection 319 is formed such that a portion of the left groove side surface 316 projects toward the inside, and the protrusion preventing projection 319 has a left groove inclined surface 318 as an inclined surface which is a surface that is inclined. The protrusion preventing projection 319 is, for example, as shown in Fig. 10, formed at an end portion of the left groove side surface 316 on the outer periphery side.

At a portion disposed on the outer periphery side of the inner side surface 24, the rear stepped portion 321 is recessed toward the outside (rear side), and expands between an outer-peripheral-side end of the inner side surface 24 and an inner (front) end of the outer peripheral surface 22. To be more specific, the rear stepped portion 321 has: a right groove side surface 326 which is a surface extending from the inner periphery side toward the outer periphery side; a stepped surface 327 which is a surface extending between the inner side surface 24 and the right groove side surface 326; and a protrusion preventing projection 329 as a separation preventing device. The protrusion preventing projection 329 is formed such that a portion of the right groove side surface 326 projects toward the inside, and the protrusion preventing projection 329 has a right groove inclined surface 328 as an inclined surface which is a surface inclined. The protrusion preventing projection 329 is, for example, as shown in Fig. 10, formed at an end portion of the right groove side surface 326 on the outer periphery side.

The rubber ring 303 attached to an outer periphery of the base body 2 as a rotary wheel has tapered surfaces 337, 338 which are formed by cutting away both corner portions on the outer periphery side which are respectively formed between the outer peripheral surface 33 of the above-mentioned rubber ring 3 and the front-side side surface 34 and between the outer peripheral surface 33 of the above-mentioned rubber ring 3 and the rear-side side surface 35. To be more specific, the rubber ring 303 has a shape which corresponds to the groove 304 of the base body 2 on the inner periphery side. The rubber ring 303 has: a left side surface 331 and a right side surface 332 in a substantially circular annular flat surface shape on side surfaces thereof on the front side and the rear side; an outer peripheral surface 333 which is a surface in an annular shape; an inner peripheral surface 336 which is a surface extending more on the inner periphery side than the outer peripheral surface 333; and the tapered surfaces 337, 338 as inclined surfaces which are surfaces respectively extending between the left side surface 331 and the outer peripheral surface 333 and between the right side surface 332 and the outer peripheral surface 333, and which are inclined surfaces respectively inclined.

In the above-mentioned friction pulley 301, the left side surface 331 of the rubber ring 303 corresponds to the left groove side surface 316 of the groove 304, and the right side surface 332 of the rubber ring 303 corresponds to the right groove side surface 326 of the groove 304. Further, a contact surface pressure of a predetermined pressure is generated on pressure contact surfaces between the groove 304 and the rubber ring 303 (between the left groove side surface 316 and the left side surface 331, between the right groove side surface 326 and the right side surface 332).

As has been described heretofore, according to the friction pulley 301 of the seventh modified embodiment, in addition to advantageous effects equal or similar to the advantageous effects of the friction pulley 1 according to the embodiment described above, the following advantageous effects can be acquired.

That is, in the friction pulley 301, the protrusion preventing projections 319, 329 as the separation preventing device are formed on the groove 304. Accordingly, when the rubber ring 303 is displaced in the radial direction, the rubber ring 303 is brought into contact with the protrusion preventing projections 319, 329 from the inner periphery side. With such a configuration, it is possible to prevent the rubber ring 303 from being easily removed from the groove 304.

Further, in the friction pulley 301, the protrusion preventing projections 319, 329 project in the direction of the axis x on the outer periphery side of the groove 304, and are arranged to be brought into contact with the rubber ring 303 from the outer periphery side. Accordingly, when the rubber ring 303 is brought into pressure contact with a rotary member, depression of the rubber ring 303 toward the inner periphery side in the groove 304 is not suppressed. Accordingly, the protrusion preventing projections 319, 329 can prevent the removal of the rubber ring 303 while maintaining an effect of increasing a transmission force brought about by depression of the rubber ring 303 into the groove 304.

Further, in the friction pulley 301, the protrusion preventing projections 319, 329 are formed by making the protrusion preventing projections 319, 329 project in the direction of the axis x from the outer peripheral surfaces 12, 22. Accordingly, it is not necessary to additionally provide a member for preventing the rubber ring 303 from being easily removed from the groove 304. Further, the friction pulley 301 can be easily assembled.

The above-mentioned friction pulley 301 may be formed such that the rubber ring 303 can be accommodated in the groove 304 with a gap formed between the left groove inclined surface 318 and the tapered surface 337 and between the right groove inclined surface 328 and the tapered surface 338.

Although preferred embodiments of the present invention have been described heretofore, the present invention is not limited to the friction pulleys according to the above-mentioned embodiments, and includes any mode which falls within the concept and Claims of the present invention. Further, respective configurations may be selectively combined as desired such that the above-mentioned advantageous effects can be at least partially acquired. For example, a shape, a material, an arrangement, a size or the like of respective constitutional elements of the above-mentioned embodiments is changeable as desired according to a specific use mode of the present invention.

### List of Reference Signs

1, 50, 60, 70, 80, 101, 201, 301 friction pulley,
2 base body,
3, 103, 203, 303 rubber ring,
4, 104, 204, 304 groove,
10 front disk,
11, 111, 211, 311 front stepped portion,
12, 22 outer peripheral surface,
13, 23 inner peripheral surface,
14, 25 front-side side surface (outer side surface),
15, 24 rear-side side surface (inner side surface),
16 frontwardly-inclined surface (left groove inclined surface),
17, 27, 117, 127, 217, 227, 317, 327 stepped surface,
18, 28 flange surface,
20 rear disk,
21, 121, 221, 321 rear stepped portion,
26 rearwardly-inclined surface (left groove inclined surface),
31 front side inclined surface (left inclined surface),
32 rear side inclined surface (right inclined surface),
33, 133, 233, 333 outer peripheral surface,
34, 134 front-side side surface,
35, 135 rear-side side surface,
36, 136, 236, 336 inner peripheral surface,
40 disk,
51 embedded portion,
52 rib portion,
53, 54, 55, 56 accommodating portion,
57, 58, 59, 204a, 204b gap,
116a, 318 left groove inclined surface,
116b, 216, 316 left groove side surface,
118, 128 flange surface,
119, 129, 219, 229, 319, 329 protrusion preventing projection,
126a, 328 right groove inclined surface,
126b, 226, 326 right groove side surface,
131 left inclined surface,
132 right inclined surface,
134 front-side side surface,
135 rear-side side surface,
137, 138 tapered surface,
139a, 139b intersecting portion,
240a, 240b gap,
231, 331 left side surface,
232, 332 right side surface,
234, 235 projection abutting surface,
237, 238 cut-away side surface,
239a, 239b groove portion,
337, 338 tapered surface,
x axis

## Claims

1. A friction pulley for transmitting power in a state of being brought into pressure contact with an outer periphery of a rotary member which rotates, the friction pulley being **characterized by** comprising:
a rotary wheel having a groove on an outer periphery of the rotary wheel, the groove being recessed toward an inner periphery side, the rotary wheel being rotatable about an axis; and
a rubber ring having an annular shape and being made of rubber, the rubber ring being formed so as to be capable of being accommodated in the groove of the rotary wheel, wherein
the groove has a pair of side surfaces facing each other in a direction of the axis, each of the pair of side surfaces having an annular shape and extending from the inner periphery side toward an outer periphery side,
the rubber ring is accommodated in the groove, and has a contact surface at an outer periphery of the rubber ring and friction surfaces that are a pair of surfaces corresponding to the pair of side surfaces of the groove, the contact surface being configured to be brought into pressure contact with the rotary member so as to transmit power, and, at least in a power transmission state where the contact surface is in pressure contact with the rotary member so as to transmit power, the friction surfaces of the rubber ring are pushed against the side surfaces of the groove, and
the friction pulley further comprises a separation preventing device preventing separation of the rubber ring from the groove in an outward direction.

2. The friction pulley according to claim 1 **characterized in that** the separation preventing device includes an anchor portion formed on the rubber ring, and an anchor accommodating portion which is formed on the rotary wheel so as to extend from the groove, and accommodates the anchor portion in a lockable manner on the outer periphery side.

3. The friction pulley according to claim 2 **characterized in that** the separation preventing device includes a rib portion which connects a portion of the rubber ring accommodated in the groove and the anchor portion with each other, and a rib accommodating portion which is formed on the rotary wheel between the anchor accommodating portion and the groove so as to accommodate the rib portion.

4. The friction pulley according to claim 3 **characterized in that** the anchor accommodating portion accommodates the anchor portion with a gap formed on a side opposite to a side where the groove is formed, and the rib accommodating portion accommodates the rib portion with a gap.

5. The friction pulley according to claim 1 **characterized in that** the separation preventing device includes a pin member which penetrates the rubber ring so as to be attached to the rotary wheel.
